# EUROPEAN PATENT APPLICATION

(11) **EP 4 794 216 A1**
(43) Date of publication of application: **19.08.2026**
(21) Application number: 24895749.0
(22) Date of filing: 13.08.2024
(51) Int. Cl.: H04B 7/0456

(54) **MULTI-BEAM CONTROL METHOD FOR ANTENNA, AND DEVICE AND MEDIUM**

(30) Priority: 30.11.2023 CN 202311634734
(71) Applicant: ZTE CORPORATION, Shenzhen, Guangdong 518057 (CN)
(72) Inventor: YANG, Jun, Shenzhen, Guangdong 518057 (CN); CHEN, Yijian, Shenzhen, Guangdong 518057 (CN); SI, Yuan, Shenzhen, Guangdong 518057 (CN)
(74) Representative: Savi, Massimiliano
(86) International application number: PCT/CN2024/111620
(87) International publication number: WO 2025/112646

(57) **Abstract**

The present application provides a multi-beam control method for an antenna, and a device and a medium. The method comprises: acquiring a precoding matrix of a preconstructed antenna array, wherein the precoding matrix is obtained by adding N precoding sub-matrixes, the N precoding sub-matrixes have the same dimension, non-zero elements in any two precoding sub-matrixes are not in the same position, and modulus values of all the non-zero elements are equal; and on the basis of the precoding matrix, controlling the antenna array to transmit beams.

## Description

### CROSS-REFERENCE TO RELATED APPLICATION

This application is filed on the basis of the Chinese patent application No. 202311634734.0 filed November 30, 2023 to the CNIPA, entitled "MULTI-BEAM CONTROL METHOD FOR ANTENNA, AND DEVICE AND MEDIUM", and claims priority of the Chinese patent application. The entire contents of the above application are incorporated herein by reference.

### TECHNICAL FIELD

The present disclosure relates to the field of wireless communications, and in particular, to a method for multi-beam controlling for antenna, a device, and a medium.

### BACKGROUND

Array technology has been widely used in base stations and terminal devices for wireless communications. For example, Multiple-Input Multiple-Output (MIMO) technology and Massive MIMO technology in 4G and 5G communications rely on large-scale antenna arrays. By designing array precoding, high-directivity and high-gain narrow beams can be transmitted toward desired directions, improving wireless signal transmission performance.

In some application scenarios, an array antenna is desired to simultaneously transmit multiple beams, e.g., some broadcast signals to direct to multiple users. To this end, it is necessary to design precoding that enables simultaneous generation of multiple directional beams. In the related technology, multi-beam precoding methods include the following: (1) multi-beam precoding based on superposition of multiple Discrete Fourier Transform (DFT) vectors; (2) multi-beam precoding based on sub-arrays; and (3) multi-beam precoding based on optimization methods. However, the precoding generated by the method based on the superposition of multiple DFT vectors results in a non-constant modulus characteristic of the precoding. That is, the transmission power of each oscillator is different, which would require the arrangement of power amplifiers at antenna ports and thus hardware costs are increased. If the transmission power of each oscillator is normalized, the quality of multiple beams will be affected, and even strong side lobes and grating lobes may be generated. Multi-beam precoding based on sub-arrays forms multiple beams by dividing a large array into multiple sub-arrays, with each sub-array transmitting one beam. This method can solve the non-constant modulus problem but sacrifices antenna aperture efficiency, leading to widened beams and reduced gain. Methods based on optimization can obtain appropriate multi-beam precoding by modeling the multi-beam precoding problem as a constrained optimization problem and solving the problem through common optimization methods. However, common optimization algorithms are prone to falling into local optimal solutions and cannot obtain global optimums, resulting in reduced beam quality and susceptibility to high side lobes and grating lobes, which cause strong interference to other users.

It is important to design a multi-beam precoding scheme that satisfies both high-gain and constant-modulus requirements in the wireless communication field.

### SUMMARY

Provided are a method for multi-beam controlling for antenna, a device, and a medium in various embodiments of the present disclosure, which realize multi-beam transmission of an antenna array and address the non-constant modulus issue occurs in traditional multi-beam methods.

According to a first aspect of the present disclosure, a method for multi-beam controlling for antenna is provided. The method includes: acquiring a precoding matrix of a preconstructed antenna array, where the precoding matrix is obtained by adding *N* precoding sub-matrixes, the *N* precoding sub-matrixes have the same dimension, non-zero elements in any two precoding sub-matrixes are not in the same position, and modulus values of all the non-zero elements are equal; and on the basis of the precoding matrix, controlling the antenna array to transmit beams.

According to a second aspect of the present disclosure, an electronic device is provided. The electronic device includes, at least one processor; and a storage device storing at least one program thereon, which when executed by the processor, causes the processor to carry out the method as described above.

According to a third aspect of the present disclosure, a computer-readable medium is provided. The computer-readable medium stores a computer program which, when executed by a processor, causes the processor to carry out the method as described above.

According to the embodiments of the present disclosure, the precoding matrix is obtained by adding N sub-precoding matrices having the same dimensions. Non-zero elements in any two of the N sub-precoding matrices are not disposed at the same position. The modulus values of all the non-zero elements are equal. The precoding matrix thus obtained can address the issue of generation of multiple beams by an antenna array in wireless communications, especially the issue of non-constant modulus power of each antenna oscillator in multi-beam precoding, and can achieve higher antenna gain.

### BRIEF DESCRIPTION OF DRAWINGS

The drawings are intended to provide a further understanding of the technical scheme of the present invention, and constitute a part of the specification, and they are intended to illustrate the technical scheme of the present invention in conjunction with the embodiments of the present invention, but are not intended to limit the technical scheme of the present invention.
FIG. 1 depicts a flowchart showing a method for multi-beam controlling for antenna according to an embodiment of the present disclosure;
FIG. 2 depicts a flowchart showing the construction of a precoding matrix according to an embodiment of the present disclosure;
FIG. 3 depicts a schematic diagram showing a precoding matrix and corresponding sub-precoding matrices thereof according to an embodiment of the present disclosure;
FIG. 4A depicts a schematic diagram of another precoding matrix and corresponding sub-precoding matrices thereof according to an embodiment of the present disclosure;
FIG. 4B depicts a schematic diagram of yet another precoding matrix and corresponding sub-precoding matrices thereof according to an embodiment of the present disclosure;
FIG. 5 depicts a schematic diagram of yet another precoding matrix and corresponding sub-precoding matrices thereof according to an embodiment of the present disclosure;
FIG. 6 depicts a schematic diagram of a linear antenna array according to an embodiment of the present disclosure;
FIG. 7 depicts a schematic diagram of energy of a transmitted beam controlled by means of a precoding matrix according to an embodiment of the present disclosure;
FIG. 8 depicts a schematic diagram of a precoding matrix adapted to configure a two-dimensional antenna array according to an embodiment of the present disclosure;
FIG. 9 depicts another schematic diagram of energy of a transmitted beam controlled by means of a precoding matrix according to an embodiment of the present disclosure;
FIG. 10A depicts a schematic diagram of a precoding matrix according to an embodiment of the present disclosure;
FIG. 10B depicts a schematic diagram of another precoding matrix according to an embodiment of the present disclosure;
FIG. 10C depicts a schematic diagram of yet another precoding matrix according to an embodiment of the present disclosure; and
FIG. 11 depicts a schematic diagram showing an electronic device according to an embodiment of the present disclosure.

### DETAILED DESCRIPTION

In order to enable those having ordinary skills in the art to understand the technical scheme of the present disclosure, various embodiments of the present disclosure will be described in detail below in conjunction with the drawings.

Example embodiments will be described hereinafter with reference to the drawings, but the example embodiments may be embodied in different forms and should not be construed as limitations to the embodiments set forth herein. Instead, these embodiments are provided to enable those having ordinary skills in the art to understand the scope of the present disclosure.

As used herein, the term "and/or" includes any and all combinations of one or more related enumerated items.

The terminology used herein is only intended to describe specific embodiments and is not intended to limit the present disclosure. As used herein, the singular forms "a" and "the" are also intended to include the plural forms unless the context clearly indicates otherwise. It will also be understood that when the terms "comprising" and/or "composed of" are used in this specification, the presence of the described features, integers, steps, operations, elements and/or components is specified, but the presence or addition of one or more other features, integers, steps, operations, elements, components and/or groups thereof is not excluded.

In the following description, reference to "some embodiments" describes a subset of all possible embodiments, but it should be appreciated that "some embodiments" may be the same subset or different subsets of all possible embodiments, and may be combined with each other without conflict.

Unless otherwise defined, all terms (including technical and scientific terms) used herein have the same meaning as commonly understood by those having ordinary skills in the art to which the present disclosure belongs. It will also be understood that terms such as those defined in commonly used dictionaries should be interpreted as having meanings consistent with their meanings in the related art and the background of present disclosure, and will not be interpreted as having idealized or overly formal meanings, unless explicitly stated herein.

To address the issues of multi-beam generation in wireless antenna arrays and the non-constant modulus power of antenna oscillators in multi-beam precoding, the present disclosure provides a method for multi-beam controlling for antenna, a device, and a computer-readable storage medium. The embodiments of the present application are applicable to an antenna array, which may be disposed in a (wireless) access network device for transmitting wireless signals. Generally, an antenna array is composed of several identical antenna units arranged according to a certain pattern. An antenna array may be preset with engineering parameters such as antenna gain, antenna spacing, and transmission power.

A (wireless) access network device is a device deployed in a wireless access network to provide various wireless communication functions for terminal devices. A (wireless) access network device may include various forms of base stations, e.g., macro base stations, micro base stations (also referred to as small cells), relay stations, access points, etc. In an example, the base station involved in the embodiments of the present application may be a base station in the fifth generation (5G) mobile communication technology in which, a base station in 5G may also be referred to as a transmission reception point (TRP) or a 5G base station (the next Generation Node B, gNB), or a base station in Long Term Evolution (LTE). In the embodiments of the present disclosure, a device that implements the functions of a network device may be a network device, or may be a device supporting the network device to implement the functions, such as a chip system, and the device may be deployed in the network device. The embodiments of the present disclosure will be described with a base station serving as a network device by way of example. It should be noted that in systems the name of the wireless access network device may vary depending upon the various wireless access technologies, e.g., a base transceiver station (BTS) in a Global System for Mobile Communication (GSM) or Code Division Multiple Access (CDMA) network, a NodeB (NB) in Wideband Code Division Multiple Access (WCDMA), or an eNB or eNodeB (evolutional NodeB) in Long Term Evolution (LTE). The (wireless) access network device may also be a wireless controller in a cloud radio access network (CRAN) scenario. The (wireless) access network device may also be a base station device in a future network (such as sixth-generation mobile communication technology (6G)) or a wireless access network device in a future evolved public land mobile network (PLMN). A wireless access network device may also be a wearable device or a vehiclemounted device. A wireless access network device may also be a transmission and reception point (TRP).

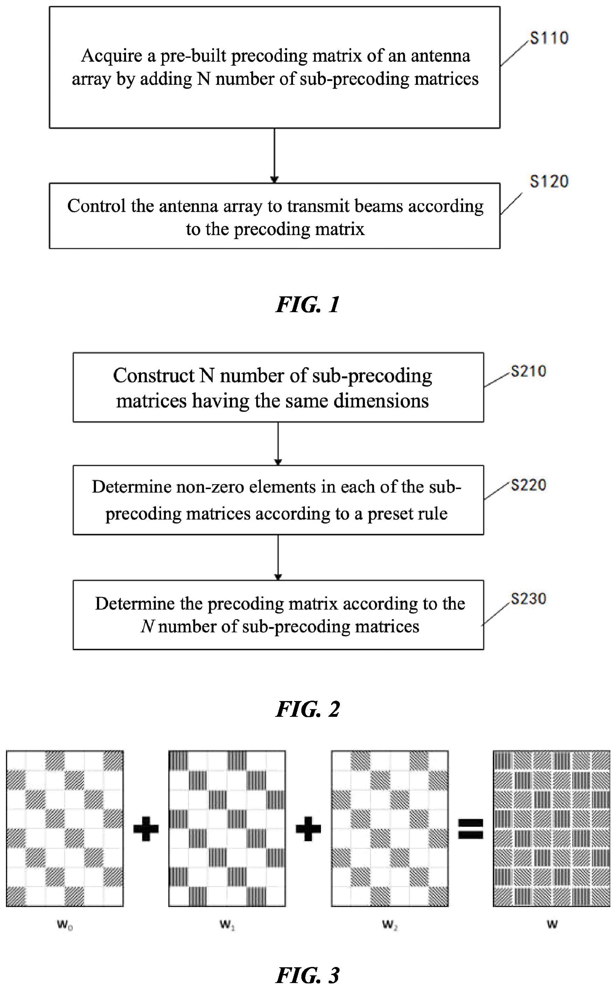

FIG. 1 depicts a flowchart showing a method for multi-beam controlling for antenna according to an embodiment of the present disclosure. As shown in FIG. 1, the method includes the following operations.

At operation S110, a pre-built precoding matrix of an antenna array is acquired by adding *N* number of sub-precoding matrices. The *N* number of sub-precoding matrices have the same dimensions. Non-zero elements in any two of the sub-precoding matrices are not at the same position. The modulus values of all the non-zero elements are equal. *N* is an integer greater than 1.

At operation S120, the antenna array is controlled to transmit beams according to the precoding matrix.

It should be appreciated that the number of sub-precoding matrices is related to a preset number of main beams to be transmitted by the antenna array. In other words, the value of the number N of sub-precoding matrices may be determined according to the preset number of the main beams to be transmitted by the antenna array.

For example, in some cases, the antenna array simultaneously transmits 2 main beams at different directions. In this case, *N* may be set to 2. In some other cases, the antenna array simultaneously transmits 3 main beams at different directions, and in this case, *N* may be set to 3. It should be noted that the number of beams generated in accordance with the precoding matrix designed by various methods set forth in the present disclosure may be greater than the preset number of main beams. For example, in some cases where 2 main beam directions are preset, 4 beams transmitted at different directions may be generated in accordance with the precoding matrix designed by various methods set forth in the present disclosure.

The construction of the precoding matrix described in the embodiments of the present disclosure may include the following operations S210-S230 as shown in FIG. 2.

At operation S210, *N* number of sub-precoding matrices having the same dimensions are constructed.

It should be appreciated that the dimensions of the *N* sub-precoding matrices are related to an arrangement of antenna units in the antenna array. For example, the antenna units in the antenna array are arranged in *N_{y}* rows and *Nₓ* columns, then the dimensions of the *N* number of sub-precoding matrices may be configured as *N_{y}* rows and *Nₓ* columns, or the dimensions of the *N* number of sub-precoding matrices may be configured as *Nₓ* rows and *N_{y}* columns. Each of *Nₓ* and *N_{y}* is an integer greater than or equal to 1.

At operation S220, non-zero elements in each of the sub-precoding matrices are determined according to a preset rule.

The preset rule includes at least one of the following:
(1) non-zero elements in any two of the *N* number of sub-precoding matrices are not arranged at the same position;
(2) modulus values of all the non-zero elements are equal.

At operation S230, the precoding matrix is determined according to the *N* number of sub-precoding matrices.

It should be appreciated that the precoding matrix according to various embodiments of the present disclosure may be expressed by the following equation: $W = {\sum }_{n = 0}^{N - 1} {a}_{n} ∗ {W}_{n}$ where ***W*** denotes the precoding matrix, *n* denotes an index of a sub-precoding matrix, ***Wₙ*** denotes the n-th sub-precoding matrix among the *N* number sub-precoding matrices, *aₙ* denotes a weighting coefficient corresponding to the n-th sub-precoding matrix, and *n*∈ {0,1, ··· , *N* - 1}.

It should be appreciated that the precoding matrix ***W*** is a matrix of *Nₓ* rows by *N_{y}* columns and the sub-precoding matrix ***Wₙ*** is also a matrix of *Nₓ* rows by *N_{y}* columns.

It should be appreciated that at least one row or at least one column in a sub-precoding matrix contains *N-1* consecutive zero elements.

It should be appreciated that the above ***Wₙ*** satisfies the following conditions:
(1) modulus value of each of the non-zero elements in ***Wₙ*** is identical, for example, the modulus value of each of the non-zero elements is 1;
(2) *N-1* zero elements are included between two adjacent non-zero elements in each row of ***Wₙ***, and *N-1* zero elements are also included between two adjacent non-zero elements in each column of ***Wₙ***;
(3) a phase difference between two adjacent non-zero elements in each row of ***Wₙ*** is a fixed value, and a phase difference between two adjacent non-zero elements in each column of ***Wₙ*** is a fixed value as well;
(4) if an element at the *p*-th row and *q*-th column of ***Wₙ*** is a non-zero element, an element at the *p*-th row and *q*-th column of ***Wₘ*** is a zero element, where *m* ∈ {0,1, ··· , *N -* 1} and *m* ≠ *n.*

It should be appreciated that each element in the precoding matrix may be employed to configure the amplitude and phase of at least one antenna oscillator in the array. An appropriate precoding for the array allows the array to transmit beams in designated directions, achieving directional transmission of signals. In some cases, the dimensions of the precoding matrix may be the same as the dimensions of the antenna array. Each element in the precoding matrix corresponds to a precoding of one antenna oscillator.

A phase difference refers to a difference between the arguments of two elements. For example, a non-zero element in ***Wₙ*** is *W_{n,pq} = e^{jθ_{pq}}*, an adjacent non-zero element is *W_{n,ps} = e^{jθₚₛ}*, where pq and ps are indices of the elements, *q* ≠ *s,* and *j* is the imaginary unit, then the phase difference between these two non-zero elements is *Δθ =* |*θ_{pq} - θ*_{*p*s}|. Since the argument is periodic, the phase difference can also be defined as *Δθ =* |*θ_{pq} - θₚₛ* + 2π|.

FIG. 3 depicts a schematic diagram showing a precoding matrix and corresponding sub-precoding matrices thereof according to an embodiment of the present disclosure. As shown in FIG. 3, in an example, the precoding matrix W is formed by adding 3 sub-precoding matrices ***W*₀***,* ***W*₁***,* and ***W*₂**. In FIG. 3, blank squares in the sub-precoding matrices ***W*₀***,* ***W*₁***,* and ***W*₂** represent zero elements, and non-blank squares represent non-zero elements. The non-zero elements in each of the ***W*₀***,* ***W*₁***,* and ***W*₂** are disposed at different positions, that is, indices of the non-zero elements are all different. As shown in FIG. 3, in each of the sub-precoding matrices, at least one row or one column includes *N*-1 consecutive zero elements, that is, any two adjacent non-zero elements in a sub-precoding matrix are separated by *N-1* consecutive zero elements. It should be appreciated that adjacent non-zero elements in a matrix refer to two non-zero elements that are immediately adjacent to each other in the same row or the same column.

It should be appreciated that modulus values of the non-zero elements in ***W*₀***,* ***W*₁***,* and ***W*₂**in FIG. 3 are equal, for example, the modulus values are 1.

It should be appreciated that a sequential relationship presents among the N sub-precoding matrices, each sub-precoding matrix has a corresponding index. Positions of the non-zero elements in a sub-precoding matrix are determined by the index of the sub-precoding matrix and the number *N* of the sub-precoding matrices.

In an example, the non-zero elements of the *n*-th sub-precoding matrix among the *N* sub-precoding matrices are determined through the following steps: for an element at the *p*-th row and *q*-th column in the *n*-th sub-precoding matrix, determining a first value according to *p* and *q,* performing a modulo operation on the first value and *N* to obtain a second value, and in a case where the second value is equal to *n*, determining that the element at the*p*-th row and *q*-th column in the *n*-th sub-precoding matrix is a non-zero element; where *n* denotes the index of the sub-precoding matrix, and *n*∈ {0,1, ··· , *N* - 1}.

In an example, the first value is determined through one of the following equations: $i = {N}_{x} - p - 1 + q ;$ or, $i = {N}_{y} - p - 1 + q ;$ or, $i = p + q ;$ where *i* denotes the first value, *N_{y}* denotes the number of rows included in the *n*-th sub-precoding matrix, *Nₓ* denotes the number of columns included in the *n*-th sub-precoding matrix, *p* denotes the row index of an element, and *q* denotes the column index of an element. In addition, the first value may also be determined according to *Nₓ - q -* 1 + *p* and *N_{y} - q - 1 +p.*

In a possible embodiment of the present disclosure, an element at the *p*-th row and *q*-th column of ***Wₙ*** is a non-zero element, *n* ∈ {0,1, ··· , *N* - 1}, *p* E {0,1, *. . . , N_{y} - 1}, q* ∈ {0,1, *. . . , Nₓ* - 1}, then *p* and *q* satisfy: $\left({N}_{x}-p-1+q\right) %N = n .$

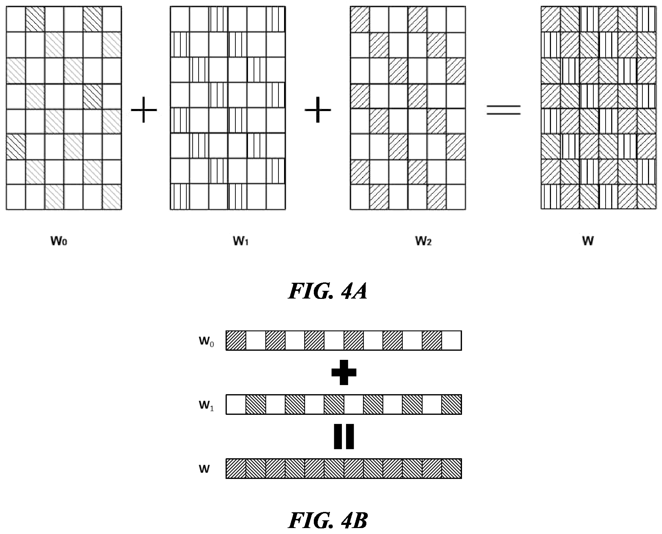

FIG. 4A depicts the non-zero elements in the three sub-precoding matrices that each satisfies Equation 5. Each of the three sub-precoding matrices shown in FIG. 4A includes 8 rows and 6 columns, i.e., *N_{y}*=8 and *Nₓ*=6. The element at the 0-th row and 1-st column of ***W*₀** is a non-zero element, satisfying (6 - 0 - 1 + 1)%3 = 0; the element at the 0-th row and 2-nd column of ***W*₀** is a non-zero element, satisfying (6 - 0 - 1 + 2)%3 = 1; and the element at the 0-th row and 0-th column of ***W*₂** is a non-zero element, satisfying (6 - 0 - 1 + 0)%3 = 2. The element at the upper-left corner in the figure is the element at the 0-th row and 0-th column.

In a possible embodiment of the present disclosure, an element at the *p*-th row and *q*-th column of ***Wₙ*** is a non-zero element, n ∈ {0,1, ··· *, N* - 1}, *p* E {0,1, ··· *, N_{y} -* 1}, q ∈ {0,1, ··· , *Nₓ* - 1}, then *p* and *q* satisfy: $\left({N}_{y}-p-1+q\right) %N = n .$

FIG. 3 depicts the non-zero elements in the shown three sub-precoding matrices that each satisfies Equation 6. Each of the three sub-precoding matrices shown in FIG. 3 includes 8 rows and 6 columns, i.e., *N_{y}*=8 and *Nₓ=*6*.* The element at the 0-th row and 2-st column of ***W*₀** is a non-zero element, satisfying (8 - 0 - 1 + 2)%3 = 0; the element at the 0-th row and 0-nd column of ***W*₀** is a non-zero element, satisfying (8 - 0 - 1 + 0)%3 = 1; and the element at the 0-th row and 0-th column of ***W*₂** is a non-zero element, satisfying (8 - 0 - 1 + 1)%3 = 2.

In a possible embodiment of the present disclosure, an element at the *p*-th row and *q*-th column of Wₙ is a non-zero element, *n* ∈ {0,1, *··· , N* - 1}, *p* ∈ {0,1, *··· , N_{y}* - 1}, *q* ∈ {0,1, *··· , Nₓ* - 1}, then *p and q* satisfy: $\left(p+q\right) %N = n .$

FIG. 4B depicts the non-zero elements in the shown two sub-precoding matrices that each satisfies Equation 7. The two sub-precoding matrices in FIG. 4B may be regarded as a 1x12 row matrix. Elements at the 0-th row and 0/2/4/6/8/9/10-th columns of ***W*₀** satisfy (p *+ q)%N = n,* where *N*=2, *n*=0, *p*=0, and q=0/2/4/6/8/9/10. Elements at the 0-th row and 1/3/5/7/9/11-th columns of ***W*₀** satisfy (*p + q*)%*N = n,* where *N*=2, *n*=1, *p*=0, and *q*=1/3/5/7/9/11.

It should be appreciated that the matrix ***W*** in FIG. 4B may be employed to configure precoding of a one-dimensional linear array. The matrix ***W*** is a column vector, and positions of non-zero elements of sub-vectors constructing ***W*** satisfy a constraint *i%N* = *n,* where *i* denotes a position index of an antenna unit, *N* denotes the number of sub-vectors, *n* ∈ {0,1, ··· , *N* - 1}, and '%' denotes a modulo operator. Elements with positions that do not satisfy the constraint are zero elements. The matrix ***W*** shown in FIG. 4B is a one-dimensional precoding including 12 elements. The precoding matrix ***W*** may be decomposed into two sub-vectors ***W*₀** and ***W*₁***,* i.e., ***W**=****W*₀***+****W*₁**, where adjacent non-zero elements in ***W*₀** and ***W*₁** are separated by one zero element, and non-zero elements in ***W*₀** and ***W*₁** appear alternately in ***W***. It can be found that the sub-vectors ***W*₀** and ***W*₁** are orthogonal vectors, i.e., ${W}_{0} ∗ {W}_{1}^{T} = 0$, where the superscript '*T*' represents transposition.

It should be appreciated that a precoding matrix may be constructed in one of the following methods.

First method: The *N* sub-precoding matrices are weighted and added to obtain the precoding matrix.

That is, the precoding matrix ***W*** may be determined according to the following equation: $W = {\sum }_{n = 0}^{N - 1} {a}_{n} ∗ {w}_{n} ;$ where ***W*** denotes a precoding matrix, *n* denotes the index of the sub-precoding matrix, ***Wₙ*** denotes the *n*-th sub-precoding matrix among the *N* sub-precoding matrices, and *aₙ* denotes a weighting coefficient of the *n*-th sub-precoding matrix among the *N* sub-precoding matrices, where *n*∈ {0,1, ··· *, N* - 1}.

In an embodiment, *aₙ* may be determined according to the following equation: ${a}_{n} = {e}^{{jθ}_{n}} ;$ where *θₙ* denotes a preset phase offset corresponding to the *n*-th sub-precoding matrix, where *n*∈ {0,1, ··· *, N* - 1}. By performing weighted summation on the sub-precoding matrices using optimized weighting coefficients to obtain the precoding matrix, side lobe power can be suppressed, and the gain for the main beam can be further improved.

In another embodiment, *aₙ* = 1. This correspond to the case where the *N* sub-precoding matrices are added directly without weighting to obtain the precoding matrix. For example, in the examples shown in FIG. 3, FIG. 4A, or FIG. 4B, the sub-precoding matrices ***W*₀***,* ***W*₁***,* and ***W*₂** are directly added to obtain the precoding matrix ***W***.

A second method: a first operation is respectively performed on the *N* sub-precoding matrices, and weighted summation is performed on the *N* sub-precoding matrices subjected to the first operation to obtain the precoding matrix.

The first operation includes a flipping operation or a rotation operation.

In an example, the flipping operation includes one of: flipping along a vertical axis, flipping along a horizontal axis, or flipping along a diagonal.

In an example, the rotation operation includes one of: a clockwise rotation or a counter-clockwise rotation.

The precoding matrix W may be determined according to the following equation: $W = {\sum }_{n = 0}^{N - 1} {a}_{n} ∗ w {′}_{n} ;$ where W denotes the precoding matrix, *n* denotes the index of a sub-precoding matrix, ***Wₙ*** denotes a matrix obtained by the *n*-th sub-precoding matrix with the first operation, and *aₙ* denotes the weighting coefficient of the *n*-th sub-precoding matrix among the *N* sub-precoding matrices, where *n*∈ {0,1, ··· , *N -* 1}.

In an embodiment, *aₙ* may be determined according to the following equation: ${a}_{n} = {e}^{{jθ}_{n}} ;$ where *θₙ* denotes a preset phase offset corresponding to the *n*-th sub-precoding matrix, where *n*∈ {0,1, ··· , *N* - 1}. By performing weighted summation on the sub-precoding matrices, side lobe power can be suppressed, and the gain for the main beam can be further improved.

In another embodiment, *aₙ* = 1, which is equivalent to the case where the phase offset for each sub-precoding matrix is identical. In this case, the *N* sub-precoding matrices on which the first operation has been performed are directly added to obtain the precoding matrix.

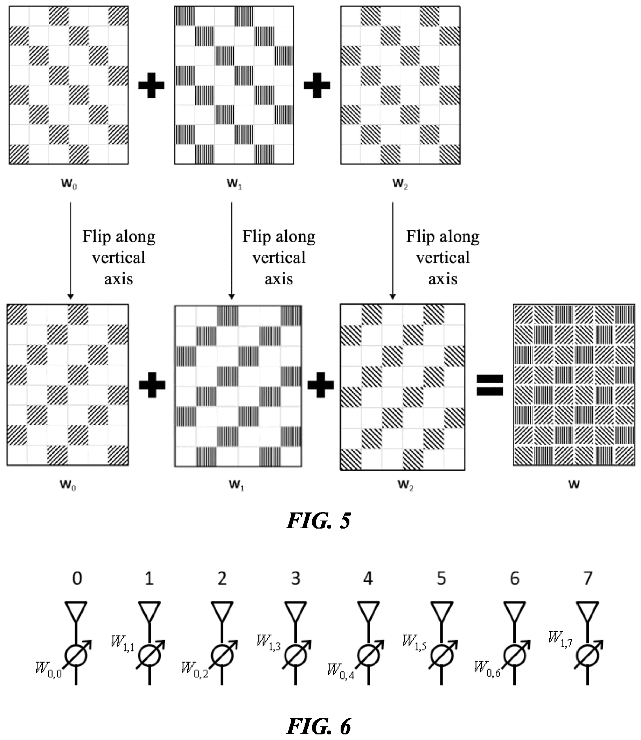

The sub-precoding matrices ***W*₀***, W*₁, and ***W*₂** as shown in FIG. 5 are obtained by respectively flipping the sub-precoding matrices ***W*₀***,* ***W*₁***,* and ***W*₂** in FIG. 3 along a vertical axis. As shown in FIG. 5, the sub-precoding matrices ***W*₀***,* ***W*₁***,* and ***W*₂** obtained after flipping along the vertical axis are added to obtain the precoding matrix ***W***.

It should be appreciated that after determining the positions of the non-zero elements in the sub-precoding matrices by choosing any one of Equations 5 to 7, and then performing the same flipping or rotation operation on each of the sub-precoding matrices, the finally obtained precoding matrix still conforms to the precoding form employed by the method according to the embodiments of the present disclosure.

It should be appreciated that, a value of a non-zero element of a sub-precoding matrix among the N sub-precoding matrices is determined by antenna spacing of the antenna array, a carrier wavelength, a row index of the non-zero element, a column index of the non-zero element, and a main beam direction preset by means of the sub-precoding matrix.

In an example, an element at the *p*-th row and *q*-th column of the *n*-th sub-precoding matrix among the *N* sub-precoding matrices is a non-zero element, then the value of the non-zero element may be determined through the following equation: ${e}^{j \left({pΨ}_{ny}+{qΨ}_{nx}\right)} ;$ where *n*∈ {0,1, ··· *, N -* 1}, *j* is the imaginary unit, and *Ψ_{ny}* and *Ψₙₓ* are preset values respectively determined by the antenna spacing of the antenna array, the carrier wavelength, and the preset main beam direction of the sub-precoding matrix. It should be noted that the multiple main beam directions can be preset by means of the multi-beam precoding scheme set forth in the present disclosure, where *Ψ_{ny}* and *Ψₙₓ* for determining values of non-zero elements of the *n*-th sub-precoding matrix are determined by the *n*-th preset main beam direction.

In a possible embodiment of the present disclosure, the precoding matrix *W* may be divided into *N* sub-precoding matrices, where an element at the *p*-th row and *q*-th column of the *n*-th sub-precoding matrix is determined by the following equation: ${W}_{n , pq} = \left\{\begin{matrix}{e}^{j \left({pΨ}_{ny}+{qΨ}_{nx}\right)} , \left({N}_{x}-p-1+q\right) %N = n \\ 0 , others\end{matrix}\right. ;$ where *Nₓ* denotes the number of columns included in the *n*-th sub-precoding matrix, *p* denotes the row index of an element, *q* denotes the column index of an element, *n* ∈ {0,1, *··· , N - 1}, p* ∈ {0,1, ··· , *N_{y}* - 1}, *q* ∈ {0,1, ··· , *Nₓ -* 1}, and *Ψ_{ny}* and *Ψₙₓ* are preset values respectively determined by the antenna spacing of the antenna array, the carrier wavelength, and the preset main beam direction of the sub-precoding matrix.

In a possible embodiment of the present disclosure, the precoding matrix ***W*** may be divided into *N* sub-precoding matrices, where an element at the *p*-th row and *q*-th column of the *n*-th sub-precoding matrix ***Wₙ*** is determined by the following equation: ${W}_{n , pq} = \left\{\begin{matrix}{e}^{j \left({pΨ}_{ny}+{qΨ}_{nx}\right)} , \left({N}_{y}-p-1+q\right) %N = n \\ 0 , others\end{matrix}\right. ;$ where *N_{y}* denotes the number of rows included in the *n*-th sub-precoding matrix, *p* denotes the row index of an element, *q* denotes the column index of an element, *n* ∈ {0,1, ··· , *N - 1},* p ∈ {0,1, ··· , *N_{y}* - 1}, *q* E {0,1, ··· , *Nₓ* - 1}, and *Ψ_{ny}* and *Ψₙₓ* are preset values respectively determined by the antenna spacing of the antenna array, the carrier wavelength, and the preset main beam direction of the sub-precoding matrix.

In a possible embodiment of the present disclosure, the precoding matrix ***W*** may be divided into *N* sub-precoding matrices, where an element at the *p*-th row and *q*-th column of the *n*-th sub-precoding matrix ***Wₙ*** is determined by the following equation: ${W}_{n , pq} = \left\{\begin{matrix}{e}^{j \left({pΨ}_{ny}+{qΨ}_{nx}\right)} , \left(p+q\right) %N = n \\ 0 , others\end{matrix}\right. ;$ where *p* denotes the row index of an element, *q* represents the column index of an element, and *n* ∈ {0,1, ··· , *N - 1}, p* ∈ {0,1, ··· , *Nₓ* - 1}, *q* ∈ {0,1, ··· , *Nₓ -* 1} , *Ψ_{ny}* and *Ψₙₓ* are preset values respectively determined by the antenna spacing of the antenna array, the carrier wavelength, and the preset main beam direction of the sub-precoding matrix.

In an application scenario, the *n*-th sub-precoding matrix corresponds to a preset main beam direction (*θₙ, φₙ*), then *Ψₙₓ = kdₓsinθₙcosφₙ* and *Ψ_{ny} = kd_{y}sinθₙsinφₙ,* where *θₙ* is a tilt angle in a spherical coordinate system, *φₙ* is an azimuth angle in the spherical coordinate system, *k* is a wave number determined by the carrier wavelength, and *dx* and *dy* are oscillator spacings of the antenna array in a first direction and a second direction respectively, which are determined by antenna design parameters.

It should be appreciated that any two adjacent non-zero elements in any row of the sub-precoding matrix have the same phase difference, and any two adjacent non-zero elements in any column have the same phase difference.

For example, phase difference between any two adjacent non-zero elements in any row of the n-th sub-matrix is *△Wx,* and phase difference between any two adjacent non-zero elements in any column is *△Wy.* It should be noted that *△Wx* and *△Wy* are generally not equal, and in special cases, they may be equal. For example, according to Equation 13, △ *Wx =* |*NΨₙₓ*|, and △ *Wy =* |*NΨ_{ny}*|.

It should be appreciated that the phase of a non-zero element may be determined according to row and column index values thereof and the preset main beam direction. For example, the element at the *p*-th row and *q*-th column of a sub-precoding matrix may be determined according to the row index *p,* column index *q* of the element, and the preset main beam direction of the sub-precoding matrix.

It should be appreciated that the main beam direction may be a combination of a tilt angle and an azimuth angle in a spherical coordinate system, or a combination of a horizontal angle and a pitch angle.

It should be appreciated that the *N* sub-precoding matrices correspond to *N* main beam directions.

It should be appreciated that modulus value of each of the non-zero elements is 1.

In an implementation, the modulus values of the non-zero elements in the sub-precoding matrix ***Wₙ*** are 1. Since non-zero elements of each sub-matrix are not co-located, the modulus value of each element in the final precoding matrix ***W*** obtained by adding all sub-matrices is 1, whereby a constant modulus characteristic of the resultant precoding is guaranteed. In a case where the array antenna is configured by means of the precoding, the addition of specialized amplifiers is not required, such that antenna design is simplified and hardware costs are reduced.

In an embodiment of the present disclosure, each element in the precoding matrix corresponds to one antenna unit of the antenna array. At operation S120, the operation in which the antenna array is controlled to transmit beams according to the precoding matrix, may include the following sub-operations.

At operation S121, a beam amplitude of an antenna unit is determined according to a modulus value of a corresponding element in the precoding matrix.

At operation S122, a beam phase of an antenna unit is determined according to a phase of a corresponding element in the precoding matrix.

At operation S123, the antenna unit is controlled to transmit a beam signal according to the amplitude and the phase of the corresponding element in the precoding matrix.

In a possible embodiment of the present disclosure, the precoding matrix ***W*** is employed to configure a linear antenna array. FIG. 6 depicts a schematic diagram of a linear antenna array according to an embodiment of the present disclosure. As shown in FIG. 6, the linear antenna array is composed of 8 antenna units arranged at equal intervals, and the antenna units are numbered 0-7 from left to right. The precoding matrix ***W*** applicable to the antenna array shown in FIG. 6 may be divided into two sub-precoding matrices ***W***₀ and ***W*₁***,* and the followings are satisfied:
(1) modulus value of each of the non-zero element in sub-precoding matrix ***W***₀ and sub-precoding matrix ***W***₁ is 1;
(2) one zero element is included between any two adjacent non-zero elements in sub-precoding matrices ***W*₀** and ***W***₁;
(3) a phase difference between two adjacent non-zero elements in each row of sub-precoding matrices ***W*₀** and ***W***₁; is a fixed value, and a phase difference between two adjacent non-zero elements in each column of sub-precoding matrices ***W*₀** and ***W***₁ is a fixed value as well;
(4) the non-zero elements in sub-precoding matrix ***W*₀** and the non-zero elements in sub-precoding matrix ***W*₁** are not co-located, where the term 'non-located' here means that an index of any non-zero element in sub-precoding matrix ***W***₀ is different from index of each of the non-zero elements in sub-precoding matrix ***W*₁**.

In one case, sub-precoding matrix ***W***₀ includes 4 non-zero elements, sub-precoding matrix W₁ also includes 4 non-zero elements, and *W*₀ = [*W*_{*0*,0}, 0, *W*_{0,2}*,* 0, *W*_{0,4}*,* 0, *W*_{0,6}, 0], and ***W***₁ = [0, *W*_{1,1}*,* 0, *W*_{1,3}*,* 0, *W*_{1,5}*, 0, W*_{1,7}]. That is, the four non-zero elements of sub-precoding matrix ***W*₀** are *W*_{0,0}, *W*_{0,2}, *W*_{0,4}, and W_{0.6}, which are employed to configure precoding of antenna units Nos. 0, 2, 4, and 6 of the array, while the four non-zero elements of sub-precoding matrix ***W*₁** are *W*_{1,1}, *W*_{1,3}*, W*_{1,5}, and *W*_{1,7}, which are employed to configure antenna units Nos. 1, 3, 5, and 7 of the array, as shown in FIG. 6.

Assuming that a main beam direction corresponding to sub-precoding matrix ***W***₀ is *θ*₀ = 15 ° *, φ*₀ *=* 0 ° *,*and a main beam direction corresponding to sub-precoding matrix ***W*₁** is *θ*₁ = 15 ° , *φ*₁ = 180 ° , then according to Equation (11), a feasible multi-beam precoding sub-matrix may be obtained in which: ${W}_{0} = \left[{e}^{j 194.452 °}, 0, {e}^{j 287.627 °}, 0, {e}^{j 20.802 °}, 0, {e}^{j 113.976 °}, 0\right] ,$ ${W}_{1} = \left[0, {e}^{j 113.976 °}, 0, {e}^{j 20.802 °}, 0, {e}^{j 287.627 °}, 0, {e}^{j 194.452 °}\right] ,$ $\begin{matrix}W = {W}_{0} + {W}_{1} \\ = \left[{e}^{j 194.452 °}, {e}^{j 113.976 °}, {e}^{j 287.627 °}, {e}^{j 20.802 °}, {e}^{j 20.802 °}, {e}^{j 287.627 °}, {e}^{j 113.976 °}, {e}^{j 194.452 °}\right]\end{matrix}$

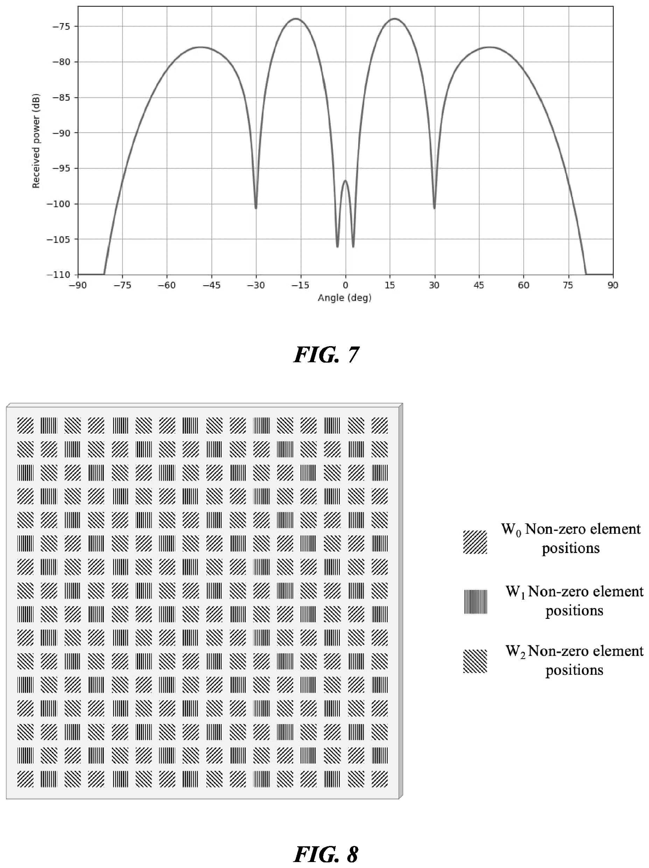

Absolute value of phase difference between two adjacent non-zero elements in each of ***W*₀** and ***W*₁** is 93.175°, and the modulus value of each element in the resultant precoding matrix ***W*** is 1. In a case where a linear array shown in FIG. 6 is configured by means of the precoding matrix, four beams shown in FIG. 7 may be obtained, where the four beams are respectively located at symmetric positions on both sides of a normal line of the array. Accordingly, multi-beam control of an antenna array can be implemented by means of the method set forth in the present disclosure with the condition of a precoding constant modulus constraint satisfied.

In another possible embodiment of the present disclosure, the precoding matrix ***W*** is employed to configure a two-dimensional planar antenna array. In an example, a two-dimensional antenna array is composed of 16 rows and 16 columns of antenna units arranged at equal intervals. FIG. 8 depicts a schematic diagram of a precoding matrix adapted to configure a two-dimensional antenna array according to an embodiment of the present disclosure. The precoding matrix ***W*** shown in FIG. 8 for configuring the antenna array may be divided into three precoding sub-matrices ***W*₀***,* ***W*₁***,* and ***W*₂***,* and the followings are satisfied:
(1) modulus value of each of the non-zero element in sub-precoding matrix ***W*₀***,* ***W*₁** or ***W*₂** is 1;
(2) two zero elements are included between any two adjacent non-zero elements in sub-precoding matrix ***W*₀***, **W***₁ or ***W*₂** ;
(3) a phase difference between two adjacent non-zero elements in each row of sub-precoding matrix ***W*₀***,* ***W*₁** or ***W*₂** is a fixed value, and a phase difference between two adjacent non-zero elements in each column of sub-precoding matrix ***W*₀***,* ***W*₁** or ***W*₂** is also a fixed value; the adjacent non-zero elements refer to two closest non-zero elements (immediately adjacent) in the same row or the same column in a matrix.
(4) non-zero elements in sub-precoding matrix ***W*₀***,* ***W*₁***,* and ***W*₂** are not co-located, and thus *W*₀ ⊗ ***W*₁** *= W*₀ ⊗ ***W*₂** *= W₁* ⊗ ***W*₂** *=* 0, where the operator ⊗ denotes a Hadamard product.

Positions of the non-zero elements in ***W***₀ , ***W*₁***,* and ***W*₂** as shown in FIG. 8 are determined by the following method.

For any indices *p* and *q,* where *p* ∈ {0,1, ··· ,15} and *q* ∈ {0,1, ··· ,15}, if (*p + q*)%*3=0,* an element at the *p*-th row and *q*-th column in sub-precoding matrix W₀ is a non-zero element; if (*p* + *q*)%3=1, an element at the *p*-th row and q-th column in sub-precoding matrix ***W*₁** is a non-zero element; and if (*p* + *q*)%3=2, an element at the *p*-th row and *q*-th column in sub-precoding matrix ***W*₂** is a non-zero element. Finally, the positions of the non-zero elements in ***W*₀***,* ***W*₁***,* and ***W*₂** are obtained as shown in FIG. 8.

Given three main beam directions (*θ*₀, *φ*₀), (*θ*₁, *φ*₁), and (*θ*₂, *φ*₂), and selecting one of Equation (11), Equation (12), or Equation (13), to calculate sub-precoding matrices ***W*₀***,* ***W*₁***,* and ***W***₂, and the three sub-precoding matrices are added/weighted-added to a generate the precoding matrix ***W*** for configuring an antenna array.

Alternatively, given three main beam directions (*θ*₀, *φ*₀), (*θ*₁, *φ*₁)*,* and (*θ*₂, *φ*₂), and selecting one of Equation (11), Equation (12), or Equation (13), to calculate sub-precoding matrices ***W***₀ *,* ***W*₁***,* and ***W*₂** , and after each of the three sub-precoding matrices are flipped/rotated, the three sub-precoding matrices are added/weighted-added to generate the precoding matrix ***W*** for configuring the antenna array.

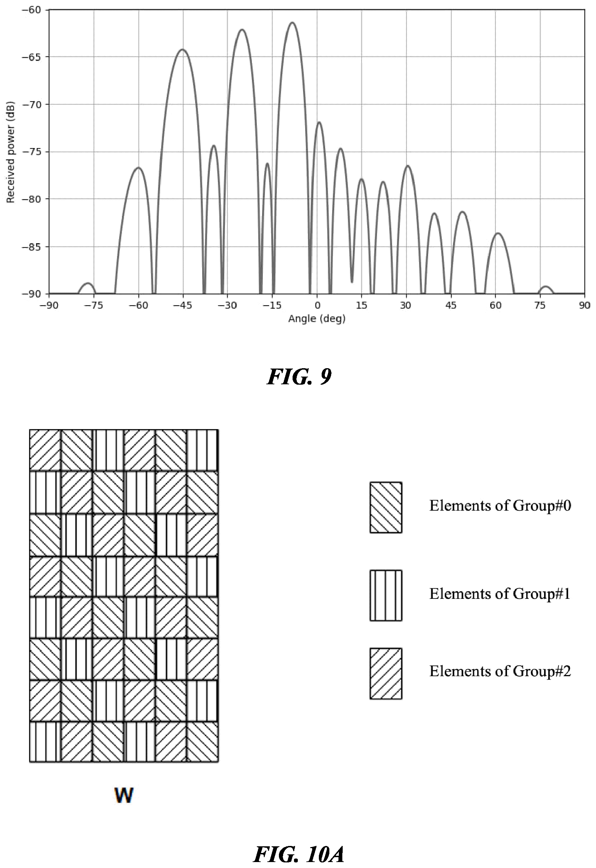

In an example, based on given main beam directions (*θ*₀ = 45 ° , *φ*₀ = 0), (*θ*₁ = 25 ° *, φ₁ =* 0 ° *), and* (*θ*₂ = 9 ° *, φ*₂ = 0 ° ), corresponding sub-precoding matrices are obtained by means of Equation (13). Then the three sub-precoding matrices are added to obtain a precoding matrix ***W*.** A simulation result of beams transmitted by an antenna array configured by means of the precoding matrix ***W*** is shown in FIG. 9, and it can be seen that by means of the precoding matrix ***W***, beams in three preset directions are realized with the constant modulus constraint satisfied.

In the solutions set forth in the embodiments of the present disclosure, transmission signals of an array are controlled by means of a precoding matrix to implement beamforming in multiple directions and to form multiple directed beams. The precoding matrix is obtained by means of performing summation on *N* sub-precoding matrices having the same dimensions. Non-zero elements in any two of the *N* sub-precoding matrices are not disposed at the same position, and the modulus value of each of the non-zero elements is equal. The precoding matrix thus obtained not only resolves the problem of multi-beam generation for an array antenna in wireless communications, but also resolves the problem of non-constant modulus power of each antenna oscillator in multi-beam precoding, and higher antenna gain can be achieved.

It should be appreciated that, in the embodiments discussed above, the precoding matrix designed in the multi-beam control method set forth in the present disclosure is described in a form of being divided into a plurality of sub-precoding matrices. In effect, a plurality of sub-precoding matrices may also be understood as elements in a precoding matrix being divided into a plurality of groups. Each group is composed of elements at specific positions in the precoding matrix. Furthermore, the value of each element in each group is calculated according to a specific rule.

In an implementation, the construction of the precoding matrix may include the following operations S310-S320.

At operation S310, an initial precoding matrix is constructed.

It should be appreciated that the dimensions of the sub-precoding matrices are related to an arrangement of antenna units in the antenna array. For example, the antenna units in the antenna array are arranged in *N_{y}* rows and *Nₓ* columns, then the dimensions of the precoding matrix may be configured as *N_{y}* rows and *Nₓ* columns, or may be configured in *Nₓ* rows and *N_{y}* columns. Each of *Nₓ* and *N_{y}* is an integer greater than or equal to 1.

At operation S320, a value of each element in the precoding matrix is determined.

It should be appreciated that each element in the precoding matrix is a non-zero element, and the value of each element in the precoding matrix may be determined through the following operations S321-S322.

At operation S321, elements in the precoding matrix are grouped into N groups according to a preset rule, where *N* is an integer greater than 1.

It should be noted that a value of *N* may be determined according to a preset number of main beams to be transmitted by the antenna array. For example, in some cases, the antenna array simultaneously transmits 2 main beams at different directions. In this case, *N* may be set to 2. In some other cases, the antenna array simultaneously transmits 3 main beams at different directions, and in this case, *N* may be set to 3. It should be noted that the number of beams generated in accordance with the precoding matrix designed by various methods set forth in the present disclosure may be greater than the preset number of main beams. For example, in some cases where 2 main beam directions are preset, 4 beams transmitted at different directions may be generated in accordance with the precoding matrix designed by various method set forth in the present disclosure.

Grouping of the elements in the precoding matrix may be implemented through the following methods.

A first method: for an element at the *p*-th row and *q*-th column in a precoding matrix, a corresponding group thereof may be determined through the following equation: $n = \left({N}_{x}-p-1+q\right) %N ;$ where *n* denotes a group number corresponding to the element at *p*-th row and *q*-th column in the precoding matrix, *Nₓ* denotes the number of columns included in the precoding matrix, *n* ∈ {0,1, ··· , *N* -1}, *p* ∈ {0,1, ··· , *N_{y}* - 1}, and *q* ∈ {0,1, ··· *, Nₓ -* 1}.

Referring to FIG. 10A, the precoding matrix ***W*** shown in FIG. 10A includes 8 rows and 6 columns, i.e., *Nₓ*=6. Assuming that the elements of the precoding matrix ***W*** are to be grouped into 3 groups, i.e., *N*=3, then according to Equation 14, a group number corresponding to an element at the 0-th row and 0-th column in the precoding matrix ***W*** is 2, a group number corresponding to an element at the 0-th row and 1-st column is 0, a group number corresponding to an element at the 0-th row and 2-nd column is 1, and so on. In this way, the grouping of all elements in the precoding matrix ***W*** is achieved.

A second method: a corresponding group for an element at the *p*-th row and *q*-th column in the precoding matrix, may be determined through the following equation: $n = \left({N}_{y}-p-1+q\right) %N ;$ where *n* denotes a group number corresponding to the element at *p*-th row and *q*-th column in the precoding matrix, N_{y} denotes the number of rows included in the precoding matrix, n ∈ {0,1, ··*·* , *N* - 1}, *p* ∈ {0,1, ··· , *N_{y}* - 1}, and *q* ∈ {0,1, ··· , *Nₓ -* 1}.

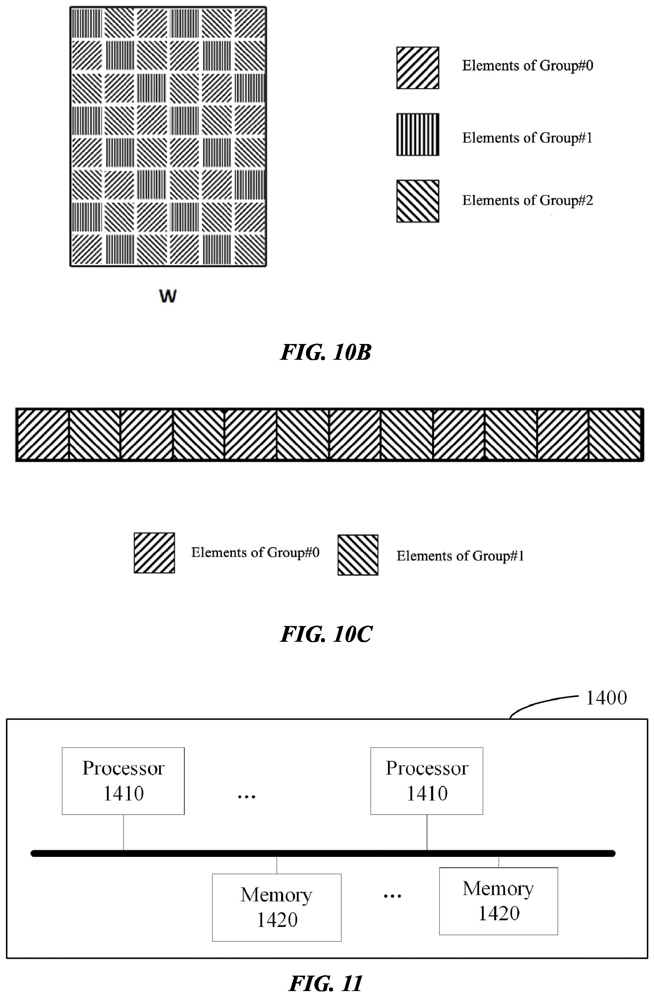

Referring to FIG. 10B, the precoding matrix ***W*** shown in FIG. 10B includes 8 rows and 6 columns, i.e., *N_{y}*=8. Assuming that the elements of the precoding matrix ***W*** are to be grouped into 3 groups, i.e., *N*=3, then according to Equation 15, a group number corresponding to an element at the 0-th row and 0-th column in the precoding matrix ***W*** is 1, a group number corresponding to an element at the 0-th row and 1-st column is 2, a group number corresponding to an element at the 0-th row and 2-nd column is 0, and so on. In this way, the grouping of all elements in the precoding matrix ***W*** is achieved.

A third method: a corresponding group for an element at the *p*-th row and *q*-th column in the precoding matrix, may be determined through the following equation: $n = \left(p+q\right) %N ;$ where *n* denotes a group number corresponding to the element at *p*-th row and *q*-th column in the precoding matrix, *n* ∈ {0,1, ··· , *N* - 1}, *p* ∈ {0,1, ··· , *N_{y}* - 1}, and *q* ∈ {0,1, ··· , *Nₓ* - 1}.

Referring to FIG. 10C, the precoding matrix ***W*** shown in FIG. 10C is a 1x12 row matrix. Assuming that the elements of the precoding matrix ***W*** are to be grouped into 2 groups, i.e., *N*=2, then according to Equation 16, a group number corresponding to an element at the 0-th row and 0-th column in the precoding matrix ***W*** is 0, a group number corresponding to an element at the 0-th row and 1-st column is 1, a group number corresponding to an element at the 0-th row and 2-nd column is 0, and so on. In this way, the grouping of all elements in the precoding matrix ***W*** is achieved.

At operation S322, a value of each element in the precoding matrix is determined according to the group corresponding to the element.

In an implementation, the value of the element may be determined according to the following equation: ${W}_{n , pq} = {e}^{j \left({pΨ}_{ny}+{qΨ}_{nx}\right)} ;$ where *n* denotes the group number corresponding to the element, p denotes a row index of the element, q denotes a column index of the element, *n* ∈ {0,1, *··· , N* - 1}, *p* ∈ {0,1, *··· , N_{y}* - 1}, *q* ∈ {0,1, *··· , Nₓ -* 1}, *j* is the imaginary unit, and *Ψ_{ny}* and *Ψₙₓ* are preset values respectively determined by antenna spacing of the antenna array, a carrier wavelength, and the *n*-th main beam direction preset with the sub-precoding matrix.

It should be noted that the precoding matrix obtained through the above operations S310-S320 satisfies the following conditions.

Condition #1: Modulus value of each of the elements in the precoding matrix is equal, for example, the modulus value of each of the elements is 1.

Condition #2: For each row in the precoding matrix, *N*-1 elements from other groups are contained between two adjacent elements of the same group. Furthermore, for each column in the precoding matrix, *N*-1 elements from other groups are also contained between two adjacent elements of the same group.

Condition #3: For each row in the precoding matrix, the phase difference between two adjacent elements of the same group is configured to be a fixed value. Furthermore, for each column in the precoding matrix, the phase difference between two adjacent elements of the same group is also configured to be a fixed value.

It should be appreciated that each element in the precoding matrix may be employed to configure the amplitude and phase of at least one antenna oscillator in the array. An appropriate precoding for the array allows the array to transmit beams in designated directions, achieving directional transmission of signals. In some cases, the dimensions of the precoding matrix may be the same as the dimensions of the antenna array. Each element in the precoding matrix corresponds to a precoding of one antenna oscillator.

The phase difference is defined as a difference between arguments of two elements. For example, an element of a group *n* is *W_{n,pq} = e^{jθ_{pq}},* and an adjacent element of the same group is *W_{n,ps} = e^{jθₚₛ},* where *p, q* and *p, s* are indices of the elements, *q*≠*s,* and *j* is the imaginary unit. Then, the phase difference between the two non-zero elements is *Δθ* = |*θ_{pq}* - *θ*ₚₛ|. Since the argument is periodic, the phase difference may also be defined as *Δθ =* |*θ_{pq} - θₚₛ* + 2*π*|.

It should be appreciated that, once the value of each element in a precoding matrix is determined, a target precoding matrix is obtained. Each element in the target precoding matrix is configured to be applied to at least one antenna unit of an antenna array. Transmission beams of the antenna array may be controlled by means of the target precoding matrix. Accordingly, multi-beam transmission of the array antenna in wireless communications is implemented, and the problem of non-constant modulus power of each antenna oscillator in multi-beam precoding is resolved.

In some possible embodiments, once the value of each element in a precoding matrix is determined, a first operation is further performed on the precoding matrix. The precoding matrix subjected to the first operation is employed as a target precoding matrix. Each element in the target precoding matrix is configured to be applied to at least one antenna unit of an antenna array. Transmission beams of the antenna array may be controlled by means of the target precoding matrix, to implement multi-beam transmission of the array antenna in wireless communications, and the problem of non-constant modulus power of each antenna oscillator in multi-beam precoding is resolved.

In an implementation, the first operation includes a flipping operation or a rotation operation.

In an example, the flipping operation includes one of: flipping along a vertical axis, flipping along a horizontal axis, or flipping along a diagonal.

In an example, the rotation operation includes one of: a clockwise rotation or a counter-clockwise rotation.

According to an embodiment of the present disclosure, an electronic device 1400 is provided. As shown in FIG. 11, the electronic device 1400 includes, at least one processor 1410; and a memory 1420 storing at least one program thereon which, when executed by the processor 1410, causes the processor 1410 to carry out any of the methods as described above.

The memory 1420, serving as a non-transitory storage system, may be used to store non-transitory software programs and non-transitory computer-executable programs. In addition, the memory 1420 can include high-speed random-access memory and non-transitory memory, such as at least one disk memory device, flash memory device, or other non-transitory solidstate memory devices. In some implementations, the memory 1420 may include memories remotely located relative to the processor 1410, and these remote memories 1420 may be connected to the processor 1410 through a network. Examples of the above networks include, but are not limited to, the Internet, intranet, local area network, mobile communication network, and combinations thereof.

The memory 1420 may be implemented as read-only memory (ROM), a static storage device, a dynamic storage device, or random access memory (RAM). The memory 1420 may store the operating system and other programs. When the technical schemes described in the embodiments of the present specification are implemented in the form of software or firmware, the corresponding program code is stored in the memory 1420 and invoked by the processor 1410 to cause the processor 1410 to execute the methods of the embodiments of the present disclosure.

The processor 1410 may be implemented using a general-purpose central processing unit (CPU), a microprocessor, an application-specific integrated circuit (ASIC), or one or more integrated circuits, and is configured to execute programs for implementing the technical schemes described in the embodiments of the present disclosure.

In some embodiments, the electronic device further includes:
input/output interfaces configured to perform information input and output;
a communication interface configured to enable communication and interaction between the device and other devices, e.g., through wired connections (such as USB or Ethernet) or wireless connections (such as a mobile network, Wi-Fi, or Bluetooth); and
a bus configured to transmit information between various components of the device, such as the processor 1410, the memory 1420, the input/output interfaces, and the communication interfaces.

The processor 1410, the memory 1420, the input/output interface, and the communication interface may communicate with one another within the device via the bus.

According to an embodiment of the present disclosure, a computer-readable storage medium is provided. The computer-readable storage medium stores a computer-executable instruction which, when executed by a processor, causes the processor to carry out any one of the methods as described above.

According to an embodiment of the present disclosure, a computer program product is provided. The computer program product includes a computer program or a computer instruction stored in a computer-readable storage medium which, when executed by a processor of a computer device, causes the computer device to carry out the method as described in any one of the above embodiments.

The system architecture and application scenarios described in an embodiment of the present disclosure are intended for a better understanding of rather than limitations to the technical scheme of various embodiments of the present disclosure. It is known to those having ordinary skills in the art that, with the evolution of the system architecture and the emergence of new application scenarios, the technical scheme provided by the embodiment of the present disclosure is also applicable to similar technical problems.

Those of ordinary skill in the art may understand that all or part of the procedures in the methods of the above embodiments may be implemented by relevant hardware instructed by a computer program. The computer program may be stored in a non-volatile computer-readable storage medium, and when being executed, the computer program may implement the procedures of the embodiments of the above methods. Any of the memory, storage, database, or other media, if referred to in the embodiments, may include a non-volatile and/or volatile memory. The non-volatile memory may include a Read-Only Memory (ROM), a Programmable ROM (PROM), an Erasable Programmable ROM (EPROM), an Electrically Erasable Programmable ROM (EEPROM), or a flash memory. The volatile memory may include a Random Access Memory (RAM) or an external cache memory. By way of illustration instead of limitation, the RAM is available in many forms, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM), a Rambus Direct RAM (RDRAM), a Direct Rambus Dynamic RAM (DRDRAM), and a Rambus Dynamic RAM (RDRAM).

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Some embodiments of the embodiments of the present disclosure are illustrated above in conjunction with the drawings, and the present disclosure is not limited thereto. Any modification, equivalent substitution and improvement made by those skilled in the art without departing from the scope and essence of the invention should be within the scope of the present disclosure.

## Claims

1. A method for multi-beam controlling for antenna, comprising:
acquiring a pre-built precoding matrix of an antenna array by adding N sub-precoding matrices, wherein the *N* sub-precoding matrices have the same dimensions, non-zero elements in any two of the sub-precoding matrices are disposed at different positions, and modulus values of each of the non-zero elements are equal; and
controlling the antenna array to transmit beams according to the precoding matrix.

2. The method as claimed in claim 1, wherein at least one row or at least one column in each of the *N* sub-precoding matrices contains *N-1* consecutive zero elements.

3. The method as claimed in claim 1, wherein a sequential relationship presents among the *N* sub-precoding matrices, each of the *N* sub-precoding matrices has a respective index, and a position of each of the non-zero elements in each of the N sub-precoding matrices are determined by the respective index of the respective sub-precoding matrix and the number *N* of the sub-precoding matrices.

4. The method as claimed in claim 3, wherein a non-zero element in an *n*-th sub-precoding matrix among the *N* sub-precoding matrices is determined by:
for an element at a *p*-th row and *q*-th column in the *n*-th sub-precoding matrix, determining a first value according to values of *p* and *q,* performing a modulo operation on the first value and a value of *N* to calculate a second value, and in response to a determination that the second value is equal to *n*, determining that the element at the *p*-th row and *q*-th column in the *n*-th sub-precoding matrix is a non-zero element;
wherein, *n* denotes an index of the *n*-th sub-precoding matrix, and *n*∈ {0,1, ··· , N - 1}.

5. The method as claimed in claim 4, wherein the first value is determined through one of following equations: $i = {N}_{x} - p - 1 + q ;$ $i = {N}_{y} - p - 1 + q ;$ or, $i = p + q ;$ wherein *i* denotes the first value, *N_{y}* denotes a number of rows comprised in the *n*-th sub-precoding matrix, *Nₓ* denotes a number of columns comprised in the *n*-th sub-precoding matrix, *p* denotes a row index, *q* denotes a column index, *p* ∈ {0,1, *··· , N_{y} -* 1}, and *q* ∈ {0,1, ··· , *Nₓ* - 1}.

6. The method as claimed in claim 1, wherein the precoding matrix is constructed by:
performing weighted summation on the *N* sub-precoding matrices to obtain the precoding matrix;
wherein a weighting coefficient of an *n*-th sub-precoding matrix among the *N* sub-precoding matrices is *aₙ*; and
*aₙ* = *e^{jθₙ}, θₙ* denotes a preset phase offset corresponding to the *n*-th sub-precoding matrix, wherein *n*∈ {0,1, *··· , N* - 1}.

7. The method as claimed in claim 1, wherein, the precoding matrix is constructed by:
respectively performing a first operation on each of the *N* sub-precoding matrices, and performing weighted summation on the *N* sub-precoding matrices having been subjected to the first operation to obtain the precoding matrix;
wherein the first operation comprises one of a flipping operation or a rotation operation;
a weighting coefficient of an *n*-th sub-precoding matrix among the *N* sub-precoding matrices denotes *aₙ*; and
*aₙ* = *e^{jθₙ},* and *θₙ* denotes a preset phase offset corresponding to the n-th sub-precoding matrix, wherein *n*∈ {0,1, ··· *, N* - 1}.

8. The method as claimed in claim 7, wherein, the flipping operation comprises one of: flipping along a vertical axis, flipping along a horizontal axis, or flipping along a diagonal; and
and the rotation operation comprises one of: clockwise rotation or counter-clockwise rotation.

9. The method as claimed in claim 1, wherein a value of a non-zero element of a sub-precoding matrix among the *N* sub-precoding matrices is determined by antenna spacing of the antenna array, a carrier wavelength, row and column indices of the non-zero element, and a main beam direction preset by means of the sub-precoding matrix.

10. The method as claimed in claim 9, wherein an element at *p*-th row and *q*-th column of an *n*-th sub-precoding matrix among the N sub-precoding matrices is a non-zero element, and a value of the non-zero element is determined by: ${e}^{j \left({pΨ}_{ny}+{qΨ}_{nx}\right)} ;$ wherein *n*∈ {0,1, ··· , *N* - 1}, p ∈ {0,1, ··· , *N_{y}* - 1}, and *q* ∈ {0,1, ··· , *Nₓ* - 1}, *j* is imaginary unit, and *Ψ_{ny}* and *Ψₙₓ* are preset values respectively determined by the antenna spacing of the antenna array, the carrier wavelength, and the preset main beam direction of the *n*-th sub-precoding matrix.

11. The method as claimed in claim 1, wherein for each of the sub-precoding matrices, each pair of two adjacent non-zero elements in each row of the sub-precoding matrix has a same phase difference, and each pair of adjacent non-zero elements in each column has a same phase difference.

12. The method as claimed in claim 11, wherein a phase of a non-zero element is determined according to row and column index values of the non-zero element and a preset main beam direction.

13. The method as claimed in claim 1, wherein a modulus value of each of the non-zero elements is 1.

14. The method as claimed in claim 1, wherein a value of *N* is determined according to a number of preset main transmitting beams of the antenna array.

15. The method as claimed in claim 1, wherein each element in the precoding matrix is employed to configure at least one of a plurality of antenna units of the antenna array, and controlling the antenna array to transmit beams according to the precoding matrix comprises:
determining a beam amplitude of a respective antenna unit according to a modulus value of a corresponding element in the precoding matrix;
determining a beam phase of the respective antenna unit according to a phase of the corresponding element in the precoding matrix; and
controlling the respective antenna unit to transmit a beam signal according to the beam amplitude and the beam phase.

16. An electronic device, comprising:
at least one processor; and
a memory storing at least one program thereon, which when executed by the processor, causes the processor to carry out the method of any one of claims 1 to 15.

17. A computer-readable medium storing a computer program thereon, which when executed by a processor, causes the processor to carry out the method as claimed in any one of claims 1 to 15.
